(19) Europäisches Patentamt
European Patent Office
Office européen des brevets

(11) **EP 3 668 198 B1**

(12) # EUROPEAN PATENT SPECIFICATION

(45) Date of publication and mention
of the grant of the patent:
**24.07.2024 Bulletin 2024/30**

(21) Application number: **17920826.9**

(22) Date of filing: **10.08.2017**

(51) International Patent Classification (IPC):
**H04W 52/54** *(2009.01)*   **H04W 52/36** *(2009.01)*
**H04W 52/14** *(2009.01)*   **H04W 52/38** *(2009.01)*

(52) Cooperative Patent Classification (CPC):
**H04W 52/365; H04W 52/54;** H04W 52/146;
H04W 52/38

(86) International application number:
**PCT/JP2017/029216**

(87) International publication number:
**WO 2019/030926 (14.02.2019 Gazette 2019/07)**

(54) **USER EQUIPMENT AND RADIO COMMUNICATION METHOD**

BENUTZERGERÄT UND FUNKKOMMUNIKATIONSVERFAHREN

ÉQUIPEMENT UTILISATEUR ET PROCÉDÉ DE COMMUNICATION RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2020 Bulletin 2020/25**

(73) Proprietor: **NTT DOCOMO, INC.**
**Chiyoda-ku**
**Tokyo 100-6150 (JP)**

(72) Inventor: **OSAWA, Ryosuke**
**Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
**WO-A1-2013/165286    WO-A1-2015/005463
JP-A- 2013 509 074**

- LG ELECTRONICS: "Remaining Details of Uplink Power Control", vol. RAN WG1, no. Guangzhou, China; 20131007 - 20131011, 28 September 2013 (2013-09-28), XP050717510, Retrieved from the Internet <URL:http://www.3gpp.org/ftp/tsg_ran/WG1_RL1/TSGR1_74b/Docs/> [retrieved on 20130928]
- INTERDIGITAL INC: "Power Control with multiple waveforms and numerologies", vol. RAN WG1, no. Hangzhou; 20170515 - 20170519, 14 May 2017 (2017-05-14), XP051274309, Retrieved from the Internet <URL:http://www.3gpp.org/ftp/Meetings_3GPP_SYNC/RAN1/Docs/> [retrieved on 20170514]
- HUAWEI, HISILICON: "Discussion on PHR calculation [ online", 3GPP TSG RAN WG1 NR AD HOC MEETING RL-1710475, 17 June 2017 (2017-06-17), pages 1 - 4, XP051305070, Retrieved from the Internet <URL:http://www.3gpp.org/ftp/TSG_RAN/WG1_RL1/TSGR1_AH/NR_ AH _ 1706/Docs/R1-1710475.zip> [retrieved on 20171017]
- SAMSUNG: "On PHR Requirements and Calculation [ online", 3GPP TSG RAN WG1 NR AD-HOC MEETING RL-1710766, 16 June 2017 (2017-06-16), pages 1 - 4, XP051304375, Retrieved from the Internet <URL:http://www.3gpp.org/ftp/TSG_RAN/WG1_RL1/TSGR1_AH/NR_AH_ 1706/Docs/R1-1710766.zip> [retrieved on 20171017]

**Description**

Technical Field

The present disclosure relates to a terminal, a radio communication method, a base station and a system.

Background Art

In the UMTS (Universal Mobile Telecommunications System) network, the specifications of long term evolution (LTE) have been drafted for the purpose of further increasing high speed data rates, providing lower latency and so on (see non-patent literature 1). In addition, the specifications of LTE-A (LTE advanced and LTE Rel. 10, 11, 12 and 13) have also been drafted for the purpose of achieving increased capacity and enhancement beyond LTE (LTE Rel. 8 and 9).

Successor systems of LTE are also under study (for example, referred to as "FRA (Future Radio Access)," "5G (5th Generation mobile communication system)," "5G+ (plus)," "NR (New Radio)," "NX (New radio access)," "FX (Future generation radio access)," "LTE Rel. 14 or 15 and later versions," etc.).

In existing LTE (for example, LTE Rel. 8 to 13), a user terminal (UE (User Equipment) performs uplink transmission by using DFT-spread OFDM (DFT-S-OFDM (Discrete Fourier Transform Spread Orthogonal Frequency Division Multiplexing)).

In existing LTE, UE transmits, as feedback, a power headroom report (PHR), which contains information about each serving cell's uplink power headroom (PH), to a device on the network side (for example, to a base station).

The base station judges the uplink transmission power of the UE based on the PHR, and reports a transmission power control (TPC (Transmit Power Control)) command and/or the like, to the UE, so that proper uplink transmission power is used.

"Remaining Details of Uplink Power Control" (LG Electronics; 3GPP Draft R1-134385) describes agreements from RAN1#74 for the enhancement to UL power control, and details of the agreed subframe-set specific UL power control. The document also describes the following proposals: Proposal 1: The two subframe sets are derived from a UL-DL configuration indicator in the UL-DL reconfiguration DCI. Each subframe set is associated with a set of power control parameters and PUSCH transmission uses the associated parameter set. The TPC step is kept as in the current specification. Proposal 2: PC parameter set of SRS transmission in a subframe can be configured differently from the parameter set of PUSCH transmission in the same subframe. Further study is needed on how to indicate the used SRS parameter set. Proposal 3: If PHR is triggered based on the PH reporting procedures, PHs of all subframe sets are triggered and reported. Further study is needed on how PHs of all subframe sets will be reported. "Power Control with multiple waveforms and numerologies" (InterDigital Inc.; 3GPP Draft R1-1709156) describes agreements from RAN1#88b on UL power control, and agreements from RAN1#88 and RAN #87. The document also describes power control to support multiple numerologies and multiple waveforms, and the authors' proposals to support switching between numerologies or waveforms and to support simultaneous transmissions with different numerologies or waveforms.

WO 2013/165286 A1 describes a method in a user equipment for determining a transmit power to be used by the user equipment when transmitting in a radio communications network, which user equipment is served by a radio network node in the radio communications network. The user equipment receives, from the radio network node, an indication indicating a set of power control parameters out of multiple sets of power control parameters, which multiple sets of power control parameters are stored at the user equipment. The user equipment determines a transmit power based on the indicated set of power control parameters.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

Summary of Invention

Technical Problem

Beam-specific power control, waveform-specific power control, service type-specific power control and the like are under study for transmission power control for future radio communication systems (for example, NR).

However, when all of these specific power control modes are employed separately, parameters for each power control mode need to be configured in UE, and it necessarily follows that the amount of communication for signaling will be enormous. Also, the amount of communication for transmitting PHRs is also likely to be enormous. As a consequence, there may be a decline in communication throughput, spectral efficiency and so forth.

The present invention has been made in view of the above, and it is therefore an object of the present disclosure to provide a user terminal and a radio communication method, whereby, even when transmission power control such as beam-specific, waveform-specific or service type-specific is used, the decline in communication throughput can be reduced.

Solution to Problem

According to one aspect of the present invention, there is provided a terminal as set out in Claim 1.

According to another aspect of the present invention, there is provided a radio communication method as set out in Claim 6.

According to another aspect of the present invention, there is provided a base station as set out in Claim 7.

According to another aspect of the present invention, there is provided a system as set out in Claim 8.

Advantageous Effects of Invention

According to one example of the present disclosure, it is possible to reduce the decline in communication throughput even when transmission power control such as beam-specific, waveform-specific or service type-specific transmission power control is used.

Brief Description of Drawings

FIG. 1 is a diagram to show examples of information associated with power control IDs, object IDs and parameter set IDs according to a first embodiment of the present invention;
FIG. 2 is a diagram to show an example of the flow of PHR transmission according to a second embodiment of the present invention;
FIG. 3 is a diagram to show an exemplary schematic structure of a radio communication system according to one embodiment;
FIG. 4 is a diagram to show an exemplary overall structure of a radio base station according to one embodiment;
FIG. 5 is a diagram to show an exemplary functional structure of a radio base station according to one embodiment;
FIG. 6 is a diagram to show an exemplary overall structure of a user terminal according to one embodiment;
FIG. 7 is a diagram to show an exemplary functional structure of a user terminal according to one embodiment; and
FIG. 8 is a diagram to show an exemplary hardware structure of a radio base station and a user terminal according to one embodiment.

Description of Embodiments

Described herein is a user terminal which has a receiving section that receives configuration information for a plurality of power control IDs, and a control section that controls transmission power according to a set of transmission power parameters specified by using one of the plurality of power control IDs, and the control section determines part of the plurality of power control IDs as the target for reporting of PH (Power Headroom).

NR is planned to support waveforms based on 2 different communication schemes (which may be referred to as "multiplexing schemes," "modulation schemes," "access schemes," "waveform schemes," etc.), at least for the uplink for eMBB (enhanced Mobile Broad Band) applications. These 2 types of waveforms are, to be more specific, a waveform based on CP-OFDM (Cyclic Prefix Orthogonal Frequency Division Multiplexing) and a waveform based on DFT-S-OFDM (Discrete Fourier Transform Spread Orthogonal Frequency Division Multiplexing).

Note that the CP-OFDM waveform may be referred to as a "multi-carrier communication scheme waveform," and the DFT-S-OFDM waveform may be referred to as a "single-carrier communication scheme waveform." Also, these waveforms may be characterized based on whether or not DFT precoding (spreading) is applied to the OFDM waveform. For example, CP-OFDM may be referred to as "waveform (signal) to which DFT precoding is not applied," and DFT-S-OFDM may be referred to as "waveform (signal) to which DFT precoding is applied."

NR is anticipated to switch between CP-OFDM and DFT-S-OFDM for use, so that the waveform may switch while communication is in progress. For example, the network (base station (also referred to as "gNB") and the like) may indicate, to the UE, which one of one of the CP-OFDM-based waveform and the DFT-S-OFDM-based waveform is to be used (or command the UE to switch the waveform).

This indication may be sent to the UE by using higher layer signaling, physical layer signaling, (for example, Downlink Control Information (DCI)) or a combination of these.

For higher layer signaling, for example, RRC (Radio Resource Control) signaling, MAC (Medium Access Control) signaling (for example, MAC CE (Control Element)), broadcast information (for example, MIB (Master Information Block), SIB (System Information Block) and so forth may be used.

Studies are underway to use the CP-OFDM waveform and the DFT-S-OFDM waveform in single-stream (single-layer) transmissions and in multi-stream (multiple-layer, MIMO (Multi Input Multi Output)) transmission. However, the DFT-S-OFDM waveform may be used only for single-stream transmission.

Now, in the uplink of existing LTE (for example, LTE Rel. 13), where DFT-S-OFDM is used, open-loop transmission power control and closed-loop transmission power control are supported. Uplink transmission power control in LTE (for example, the transmission power control for an uplink shared channel (PUSCH: Physical Uplink Shared CHannel)) corrects the error of open-loop control by means of closed-loop control, which uses TPC commands received from a base station.

For example, in existing LTE, the transmission power of a PUSCH in a subframe i of a serving cell c, $P_{\text{PUSCH},c}(i)$, is represented by following equation 1:

$$P_{\text{PUSCH},c}(i) = \min \left\{ \begin{array}{l} P_{\text{CMAX},c}(i), \\ 10 \log_{10} \left( M_{\text{PUSCH},c}(i) \right) + P_{\text{O\_PUSCH},c}(j) + \alpha_c(j) \cdot PL_c + \Delta_{\text{TF},c}(i) + f_c(i) \end{array} \right\}$$

$$\dots \text{(Equation 1)}$$

In equation 1, $P_{\text{CMAX},c}(i)$ is the maximum power UE can use in transmission (the maximum possible transmission power), $M_{\text{PUSCH},c}(i)$ is the transmission bandwidth (the number of resource blocks) of the PUSCH, j is an index that shows the type of scheduling that applies to the PUSCH, $P_{\text{O\_PUSCH},c}(j)$ is a value that shows the target received power of the PUSCH or an equivalent, $\alpha_c(j)$ is a coefficient by which $PL_c$ is multiplied, $PL_c$ is the downlink path loss calculated by the UE, $\Delta_{\text{TF},c}(i)$ is an offset value in accordance with the transmission format, and $f_c(i)$ is a correction value based on transmission power control (TPC) commands (for example, the cumulative value of TPC commands, an offset amount based on TPC commands, etc.). For example, $P_{\text{O\_PUSCH},c}(j)$, $\alpha_c(j)$ and/or others may be reported in broadcast information.

In equation 1, $M_{\text{PUSCH},c}(i)$, $P_{\text{O\_PUSCH},c}(j)$, $\alpha_c(j)$, and $PL_c$ and $\Delta_{\text{TF},c}(i)$ are parameters pertaining to open-loop control. Furthermore, $f_c(i)$ is a parameter pertaining to closed-loop control. That is, the transmission power of the PUSCH is determined based on open-loop control and closed-loop control, with the maximum possible transmission power of the UE as the upper limit.

Now, although part of the parameters in this specification will be shown in simplified form (for example, "$c$," "(i)," "(j)," etc.), those skilled in the art should be able to understand their meaning with reference to existing LTE parameters and the like.

Note that, although other uplink signals (for example, an uplink control channel (PUCCH (Physical Uplink Control CHannel)), uplink measurement reference signals (SRSs (Sounding Reference Signals), etc.)) also use varying parameters, the transmission power is determined in the same manner, based on open-loop control, closed-loop control and so forth.

Meanwhile, envisaging NR, research is on-going to support open-loop transmission power control and closed-loop transmission power control. Here, the transmission power control for the uplink CP-OFDM-based waveform is also likely to be implemented in the form of equation 1 and the like, as with the transmission power control for the DFT-S-OFDM-based waveform.

Also, beam-specific power control is under study for transmission power control for NR. In beam-specific power control, for example, path loss is taken into account on a per beam basis, so that power can be controlled in units of beams. Note that a "beam" may be interpreted as meaning a "waveform," a "layer," a "layer group," a "panel," a "beam group," a "beam pair link," a "service type," and so forth.

For example, waveform-specific power control, service type-specific power control and so forth, in which at least part of the parameters for power control (for example $P_O$, $\alpha$, etc.) are changed depending on the waveform, service type and so on are also under study.

For example, NR is under study to provide radio communication services referred to as "eMBB (enhanced Mobile Broad Band)," "mMTC (massive Machine-Type Communication)," "URLLC (Ultra Reliable and Low Latency Communications)," and so on.

However, when all of these power control modes are employed separately, parameters for each power control mode need to be configured in UE, and it necessarily follows that the amount of communication for signaling will be enormous, and a decline in communication throughput will be a problem. For example, when using beam-specific, waveform-specific and service type-specific power control, in the simplest case, it is necessary to configure a large number of (combinations of) parameters to match (the number of beams x the number of waveforms x the number of service types).

So, the present inventors have come up with a method for reducing signaling suitably even when a specific mode of power control that is linked with a certain parameter is set forth in association with a plurality of parameters.

Now, embodiments of the present invention will be described below in detail with reference to the accompanying drawings. Note that the radio communication methods according to the herein-contained embodiments may be applied individually or may be applied in combination.

Note that the term "ID," as used in the following description, may be interpreted as meaning at least one of an index, an identifier, and an indicator. Also, a "signal" may be interpreted as meaning a channel, a signal and/or a channel, and/or the like.

(Radio Communication Method)

<First Embodiment>

According to the first embodiment of the present invention, UE determines the transmission power parameters to use to control the transmission power of certain signals based on the association between transmission power parameter sets and object sets, which will be described below.

A transmission power parameter set is comprised of values representing one or more transmission power parameters. These transmission power parameters may be parameters for use for calculating the transmission power of signals, and include, for example, the values of one or more parameters (Po, $\alpha$, etc.), such as those used in equation 1.

A transmission power parameter set is specified by a certain index (which may be referred to as, for example, a "transmission power parameter set ID," a "power control parameter set ID," a "parameter set ID," etc.). When a transmission power parameter set ID is reported, the UE determines the transmission power parameters to use to control the transmission power of a certain signal based on this ID.

An object set is comprised of values representing one or more objects (which may be referred to as "dimensional objects"). An object set may include, for example, the value of a certain object when power control that is specifically designed for this certain object is set forth (that is, a value to identify which value of what parameter the power control that is used is specifically designed for).

An object may be a parameter to characterize a transmitting signal, and may be, for example, a parameter that is used to generate and/or transmit the signal, and that is not included in a transmission power parameter set. Also, when "XX-specific power control" is set forth in the specification, this "XX" may be an object.

An object is a beam, a waveform, a layer, a layer group, a panel, a beam group, a beam pair link, a service type, a numerology (subcarrier spacing (SCS), etc.), a frequency (for example, carrier frequency), a time, a code (for example, a sequence), a codebook, a DCI format and so on.

An object set is specified by a certain index (which may be referred to as, for example, an "object set ID," an "object ID," etc.). When an object ID is reported, the UE determines the signal to transmit (characteristics of the signal to transmit) based on this ID.

The above association is judged based on a certain index (which may be referred to as, for example, a "power control ID") that is associated with an object ID and/or a transmission power parameter set ID. While it is preferable if there is a unique correspondence between a power control ID and an object ID, the same object ID may be associated with different power control IDs. In this case, different transmission power parameter sets can be switched around and used for the same object set.

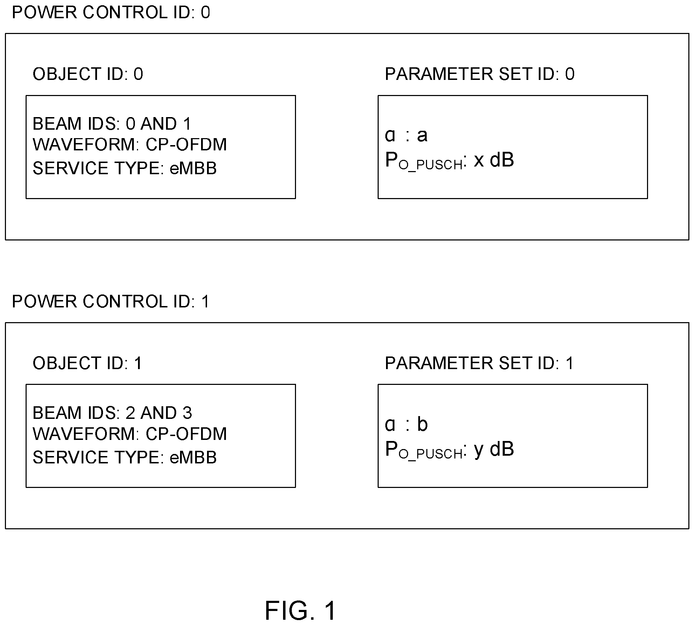

FIG. 1 is a diagram to show examples of information associated with power control IDs, object IDs and parameter set IDs according to the first embodiment of the present invention. In this example, 2 power control IDs, 2 object IDs, and 2 parameter set IDs are set forth, but the number of each ID is not limited to these.

In this example, power control IDs are associated with object IDs and parameter set IDs. For example, power control ID 0 corresponds to object ID 0 and parameter set ID 0.

Furthermore, object IDs are associated with beams, waveforms and service types. For example, object ID 0 corresponds to a signal whose beam ID is 0 and 1, waveform is CP-OFDM, and service type is eMBB.

Also, parameter set IDs are associated with $\alpha$ and $P_{O\_PUSCH}$. For example, to control the power of the signal corresponding to parameter set ID 0, the value of "a" is used as $\alpha$, and "x" dB is used as $P_{O\_PUSCH}$.

As for objects, "any" may be configured. Since "any" can match all elements, the number of object IDs can be effectively reduced. Note that, when a certain object that is included in an object set specified by a certain object ID is "any," this in effect means that the configuration of this certain object is not included in the object set.

Note that, for objects, besides "any," "odd," "even," a group of a certain indices, a group to fulfill a certain rule, and so forth may be configured.

[Configuration of Association]

Note that information about the association between object IDs and objects sets may be reported to the UE by using higher layer signaling (for example, RRC signaling, SIBs, etc.), physical layer signaling (for example, DCI) or a combination of these, or may be specified by the specification.

Also, information about the association of power control IDs and object IDs with parameter set IDs may be reported to UE by using higher layer signaling (for example, RRC signaling, SIBs, etc.), physical layer signaling (for example, DCI), or a combination of these, or may be defined by the specification.

The object that is associated with an object ID or the transmission power parameters associated with a parameter set ID may be specified by an ID, an index (for example, a beam ID, a beam pair link (beam pair) ID, etc.) and/or the like.

Also, information about the association of power control IDs and object IDs with parameter set IDs may be reported to UE by using higher layer signaling (for example, RRC signaling, SIBs, etc.), physical layer signaling (for example, DCI), or a combination of these, or may be defined by the specification.

Note that the direct association between power control IDs and object sets may be configured by higher layer signaling and the like, or the direct association between power control IDs and transmission power parameter sets may be configured by higher layer signaling or the like.

Also, default values for part or all of the parameters (objects) may be configured by higher layer signaling (for example, broadcast information) and the like, or may be defined by the specification.

Furthermore, for at least one of power control IDs, object IDs and parameter set IDs, the number of IDs to be configured, the maximum number of IDs may be reported to UE by using higher layer signaling (for example, RRC signaling, SIBs, etc.), physical layer signaling (for example, DCI) or a combination of these, or may be defined by the specification.

[UE Operation]

When, for example, at least one of a power control ID, an object ID and a parameter set ID is reported (specified), UE may specify the other IDs associated with this reported ID, determine the transmission signal (characteristic of the transmission signal) by using the object set and the transmission power parameter set corresponding to these IDs, and control the power of the transmission signal. In this case, it is possible to say that the reported ID has become active (has been activated).

At least one of a power control ID, an object ID and a parameter set ID may be reported to UE by using higher layer signaling (for example, RRC signaling, SIBs, etc.), physical layer signaling (for example, DCI) or a combination of these, or may be defined by the specification.

For example, when the UE receives a UL grant carrying a power control ID, the UE may control the power of the uplink shared channel (for example, PUSCH) scheduled by that UL grant with reference to that power control ID.

Also, when an object set or a transmission power parameter set is reported, the UE may specify the object ID or the parameter set ID that corresponds to the reported parameter set, specify other IDs (power control ID and others) associated with the specified ID, and control the power of the transmission signal by using the object set and the transmission power parameter set corresponding to these IDs.

Note that, when, for example, the values of objects or transmission power parameters that correspond to each object ID or parameter set ID do not overlap, the value of a specific object and/or transmission power parameter may be reported to specify at least one of the power control ID, the object ID and the parameter set ID.

According to the first embodiment described above, for example, a transmission power parameter and an object set (for example, a combination of a beam, a waveform and a service type) to correspond to this are configured individually, and the linkage between these is configured separately, so that the amount of signaling can be reduced, and flexible transmission power control is enabled.

<Second Embodiment>

When power control modes such as those described above are used, all or part of the transmission power parameters associated with each power control ID may differ. In this case, the transmission power and PH might vary depending on which power control ID is assumed.

Therefore, when a base station sends a report to UE for a switch of the power control ID, the base station cannot even allocate resources properly unless the base station knows what the PH will be in the configuration after the switch. For example, if the same resources as those before the switch are allocated, the transmission power of the UE might become insufficient or excessive.

Meanwhile, existing PHRs do not assume that transmission power parameters switch. That is, with existing methods, it is not possible to report the PH after the power control ID switches as mentioned above.

So, the present inventors have derived the second embodiment. With the second embodiment, UE reports PHs that correspond to certain power control IDs.

The UE may report PHs for all or part of the power control IDs that are configured to be associated with object IDs and/or parameter set IDs. These PHs may be reported by using higher layer signaling (for example, MAC signaling), physical layer signaling (for example, uplink control information (UCI)) or a combination of these.

The UE transmits, to the base station, a PHR that contains PHs pertaining to all of the power control IDs configured. In this case, the PHR may be configured so that PHR MAC CEs that respectively correspond to individual power control IDs are included in the MAC PDU (Protocol Data Unit) in ascending or descending order of the power control IDs. Note that the order of arrangement is not limited to this.

For example, the UE may transmit, to the base station, a PHR that contains PHs pertaining to part of the power control IDs configured. In this case, the PHR may be configured so that PHR MAC CEs that respectively correspond to individual power control IDs are included in the MAC PDU. A PHR MAC CE may include the power control ID corresponding to this MAC CE. The MAC PDU (for example, the MAC header of the MAC PDU) may include the power control IDs corresponding to the PHR MAC CEs included in this MAC PDU.

A MAC PDU for reporting the PH may not include explicit power control ID information. In this case, this MAC PDU may be configured so that the PHR MAC CEs that correspond to part of the power control IDs that are configured are included, for example, in ascending or descending order of the power control IDs.

[Reporting Target IDs]

The base station may select (limit) the power control IDs, for which the base station wants the UE to report the PH, from among the power control IDs configured for the UE. Here, the power control IDs, for which the base station wants the UE to report the PH, may be referred to as "reporting target IDs" or the like.

The base station may report information about the IDs to be subject to reporting, to the UE, by using higher layer signaling (for example, RRC signaling, MAC signaling, SIBs, etc.), physical layer signaling (for example, DCI), or a combination of these. For example, the UE may transmit, to the base station, a PHR that contains PHs pertaining to all of the power control IDs configured.

When a different power control ID than used up till then is notified (when a switch of the power control ID is notified), the UE may assume that this power control ID is the reporting target ID, and transmit a PHR including the PH pertaining to this power control ID, to the base station. By this means, when a notification for a switch of the power control ID (and/or the beam, waveform, service type, etc.) arrives, the PH to correspond to the configurations after the switch can be reported.

The gNB may determine the resources to allocate to the UE based on the PH that is reported in association with the configurations after the switch, and transmit DCI that commands scheduling of signals to be transmitted based on the configurations after the switch. After reporting the PH pertaining to the configurations after the switch, the UE may control the signals to be transmitted using the configurations after the switch, based on the above DCI.

Note that, when a power control ID-switching report arrives, the UE may assume that the power control ID used up till then is the ID to be subject to reporting. In this case, the PH to correspond to the configurations before the switch can be reported.

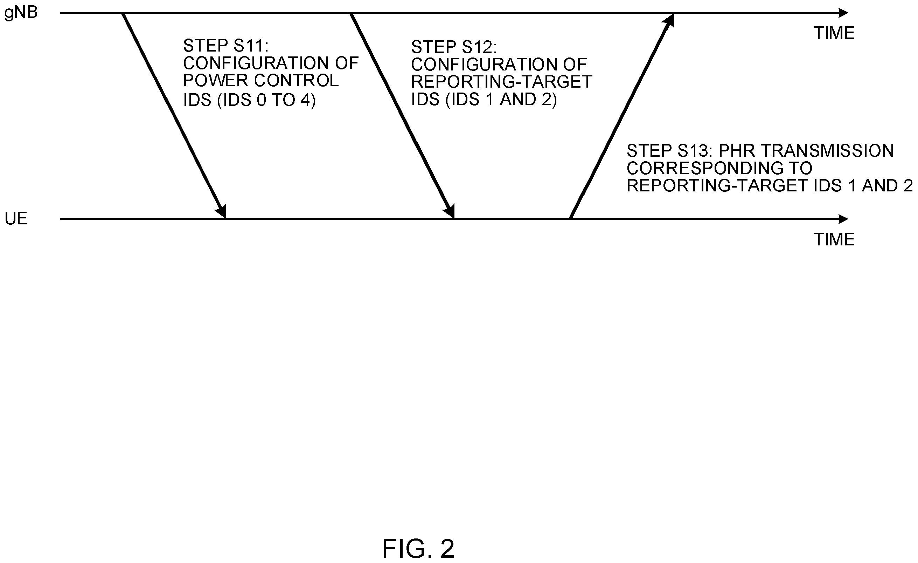

FIG. 2 is a diagram to show an example of the flow of PHR transmission according to a second embodiment of the present invention. In step S11, the gNB configures power control IDs (association with respect to power control IDs) in UE. In this example, 5 power control IDs (IDs 0 to 4) are configured.

In step S12, the gNB configures power control IDs (association with respect to power control IDs) in UE. In this example, IDs 1 and 2 are configured, out of IDs 0 to 4.

In step S13, the UE transmits, to the gNB, a PHR including the PHs for the reporting-target IDs 1 and 2 that are configured.

The UE may calculate PHs pertaining to one or more IDs to be subject to reporting, based on a reference format. For example, when there is not signal to transmit with respect to a certain reporting-target ID, the PH may be calculated based on a reference format.

The reference format may be configured (reported) in the UE by using higher layer signaling (for example RRC signaling, MAC signaling, SIBs, etc.), physical layer signaling (for example, DCI), or a combination of these, or may be defined by the specification.

For example, the reference format may correspond to an algorithm that assumes that the transmission bandwidth of a certain signal (PUCCH, PUSCH, SRS, DMRS, etc.) is a certain value (for example, 1 PRB, etc.), based on the certain algorithm for PH. Information related to this certain algorithm, certain value and the like may be reported to the UE through higher layer signaling or the like, or may be defined by the specification. When multiple reference formats are configured or defined, information as to which reference format applies to the UE may be reported to the UE by way of higher layer signaling or the like.

[Reference ID for Calculating PH] A power control ID to serve as a basis in PH calculation may be configured in (reported to) the UE. The power control ID to serves as a basis in PH calculation may be referred to as the "PH calculation reference ID" or the like.

Information about the PH calculation reference ID may be reported to the UE by using higher layer signaling (for example RRC signaling, MAC signaling, SIBs, etc.), physical layer signaling (for example, DCI), or a combination of these, or may be defined by the specification.

The reference ID for PH calculation may be determined by the UE. For example, among the reporting-target IDs configured, the UE may determine using the largest or the smallest ID as the PH calculation reference ID. Also, the UE may calculate PHs for every reporting-target ID that is configured, and, when multiple PHs have been calculated, determine the reporting-target ID that corresponds to the PH of the maximum, the minimum or the median value as the PH calculation reference ID.

The UE may determine the values to include in a PHR based on a PH that is calculated based on the reference ID for PH calculation (referred to as, for example, a "first PH") and a PH calculated based on ID to be subject to reporting (referred to as, for example, a "second PH"). For example, the UE may include and report the value (or the index) to represent the relative value (for example, the difference) between the first PH and the second PH in a PHR. Preferably, the number of bits to use to represent this relative value is less than the number of bits used to represent PH.

The UE may report the first PH described above in a PHR regardless of whether the reporting-target IDs include a reference ID for PH calculation. This allows the base station to identify the second PH based on the first PH reported, and the above-mentioned difference. The UE may report the first PH, the second PH and the relative value of one with respect to the other one and so on, to the base station, at the same timing (for example, by including them in the same PHR), or at different timings.

Note that, instead of the PH calculation reference ID, an object set and/or a transmission power parameter set to serve as a basis in PH calculation, may be configured in UE, by way of higher layer signaling and so on, or may be defined by the specification. In this case, the UE may calculate the above-mentioned first PH based on the object set and/or the transmission power parameter set to serve as a basis in PH calculation.

According to the second embodiment described above, it is possible to prevent an increase in PHR overhead even when a plurality of power control IDs are used (configured).

<Variations>

In the embodiments described above (first and second embodiments), common configurations/rules may be applied to a plurality of uplink signals, or separate configurations/rules may be provided per uplink signal. For example, transmission signals such as PUCCH, PUSCH and SRS may be configured so that the various associations described with the first embodiment, the reporting-target IDs described with the second embodiment, and the like will change.

Also, although the second embodiment has shown an example of identifying the target for reporting based on power control IDs, this is by no means limiting. For example, the power control IDs in the description of the second embodiment may be replaced by object IDs and/or parameter set IDs.

(Radio Communication System)

Now, the structure of a radio communication system according to one embodiment of this disclosure will be described below. In this radio communication system, communication is performed using one or a combination of the radio communication methods according to the herein-contained embodiments of this disclosure.

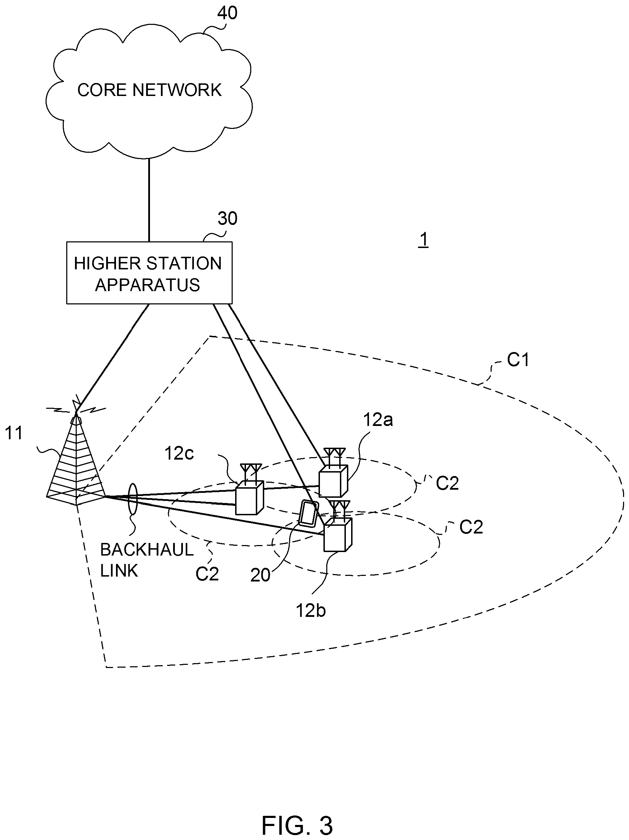

FIG. 3 is a diagram to show an exemplary schematic structure of a radio communication system according to one embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 are not limited to those illustrated in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

A numerology may refer to communication parameters that are applied to transmission and/or receipt of given signals and/or channels, and may represent at least one of the subcarrier spacing (SCS), the bandwidth, the duration of symbols, the duration of cyclic prefixes, the duration of subframes, the duration of transmission time intervals (TTIs) (for example, the duration of slots), the number of symbols per TTI, the radio frame configuration, the filtering process, the windowing process and so on.

The radio base station 11 and a radio base station 12 (or 2 radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), which includes PDSCH and/or PUSCH scheduling information, is communicated by the PDCCH.

Note that scheduling information may be reported in DCI. For example, DCI to schedule receipt of DL data may be referred to as a "DL assignment," and DCI to schedule UL data transmission may also be referred to as a "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

(Radio Base Station)

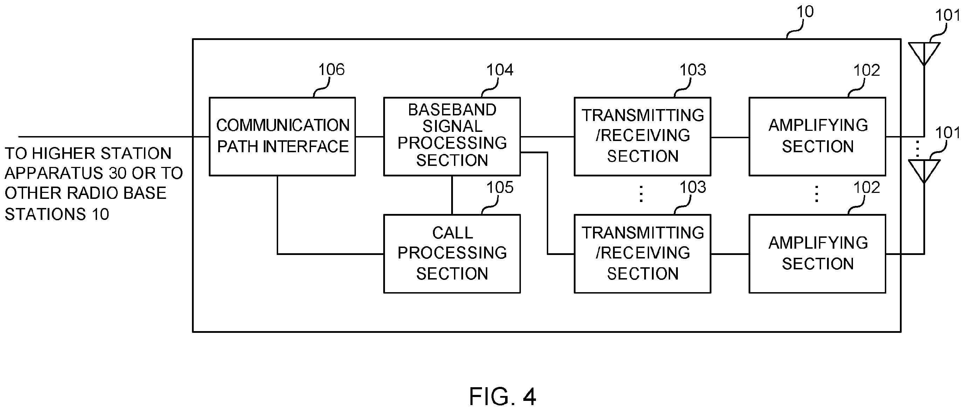

FIG. 4 is a diagram to show an exemplary overall structure of a radio base station according to one embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which this disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a certain interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which this disclosure pertains. Furthermore, the transmitting/receiving antennas 101 may be constituted by, for example, array antennas.

The transmitting/receiving sections 103 receives, from the user terminal 20, a signal that corresponds to an object set that is specified by a certain power control ID, and that is transmitted by using transmission power determined according to a transmission power parameter set specified by that certain power control ID.

In addition, the transmitting/receiving sections 103 may receive information about the power control ID in use, information about the power control ID to serve as a basis of PH calculation, PHR and the like.

The transmitting/receiving sections 103 may transmit, to the user terminal 20, power control IDs, object IDs, transmission power parameter set IDs, object sets, objects, transmission power parameter sets, transmission power parameters, reporting-target IDs, information about the reference ID for PH calculation, TPC commands and so on.

Also, the transmitting/receiving sections 103 may transmit, to the user terminal 20, information related to the association between object IDs and object sets, the association between parameter set IDs and transmission power parameter sets, the association between power control IDs and object IDs (object sets) with parameter set IDs (transmission power parameter sets) and so on.

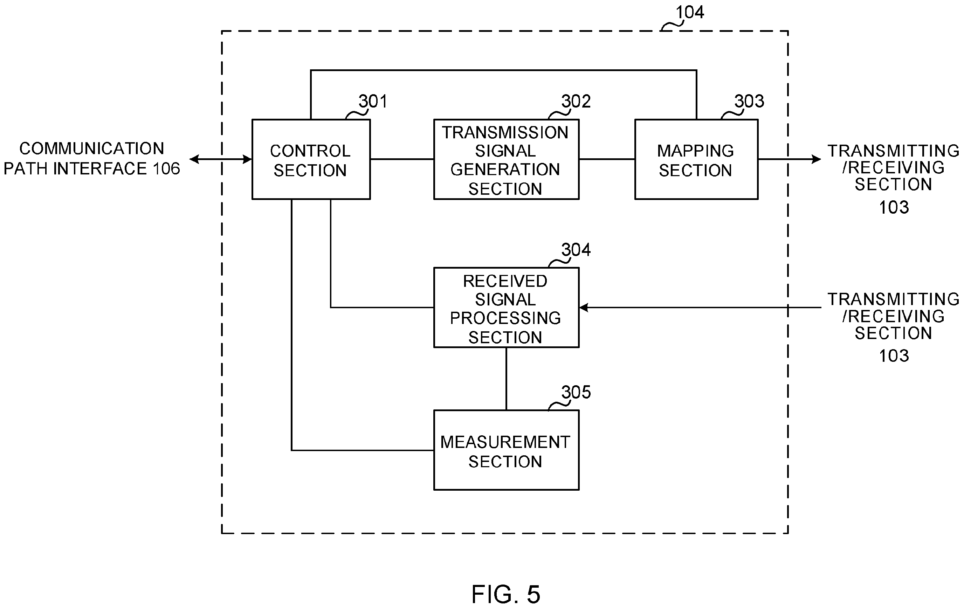

FIG. 5 is a diagram to show an exemplary functional structure of a radio base station according to one embodiment of this disclosure. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which this disclosure pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals and so on based on the results of deciding whether or not retransmission control is necessary in response to uplink data signals and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 also controls the scheduling of uplink data signals (for example, signals transmitted in the PUSCH), uplink control signals (for example, signals transmitted in the PUCCH and/or the PUSCH, such as delivery acknowledgment information), random access preambles (for example, signals transmitted in the PRACH), and uplink reference signals.

The control section 301 may exert control so that information for transmission power control is transmitted to the user terminal 20. Also, the transmitting/receiving sections 103 may transmit, to the user terminal 20, information related to the association between object IDs and object sets, he association between parameter set IDs and transmission power parameter sets, the association between power control IDs and object IDs (object sets) with parameter set IDs (transmission power parameter sets), and so on, to the user terminal 20.

The control section 301 may exert control so that the above information for transmission power control is transmitted based on a PHR received from the user terminal 20. The control section 301 may exert control so that, to allow the user terminal 20 to identify the target of reporting in the PHR, information about the reporting-target IDs is transmitted.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which this disclosure pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to certain radio resources based on commands from the control section 301, and outputs these to the transmitting/receiving sections 103. The mapping section 303 can be constituted by a mapper, a mapping circuit or mapping apparatus that can be described based on general understanding of the technical field to which this disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which this disclosure pertains can be used.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which this disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), etc.), SNR (Signal to Noise Ratio), the signal strength (for example, RSSI (Received Signal Strength Indicator)), transmission path information (for example, CSI), and so on. The measurement results may be output to the control section 301.

(User Terminal)

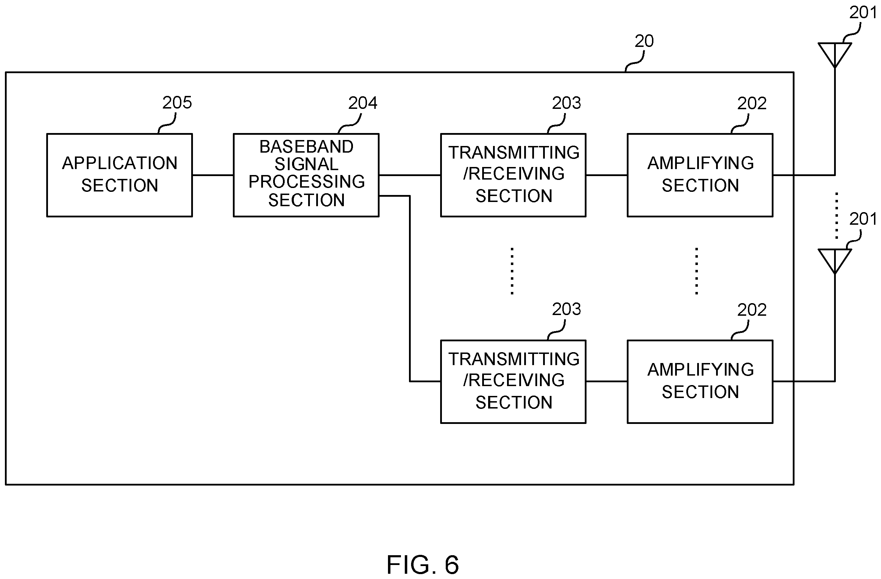

FIG. 6 is a diagram to show an exemplary overall structure of a user terminal according to one embodiment of this disclosure. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which this disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. In the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which this disclosure pertains. Furthermore, the transmitting/receiving antennas 201 may be constituted by, for example, array antennas.

The transmitting/receiving sections 203 transmits, to the user terminal 20, a signal that corresponds to an object set that is specified by a certain power control ID, and that is transmitted by using transmission power determined according to a transmission power parameter set specified by that certain power control ID.

In addition, the transmitting/receiving sections 203 may transmit information about the power control ID in use, information about the power control ID to serve as a basis of PH calculation, PHR and the like.

The transmitting/receiving sections 203 may receive, from the radio base station 10, power control IDs, object IDs, transmission power parameter set IDs, object sets, objects, transmission power parameter sets, transmission power parameters, reporting-target IDs, information about the reference ID for PH calculation, TPC commands and so on.

Also, the transmitting/receiving sections 203 receives information related to the association between object IDs and object sets, the association between parameter set IDs and transmission power parameter sets, the association between power control IDs and object IDs (object sets) and parameter set IDs (transmission power parameter sets) and so on, from the radio base station 10.

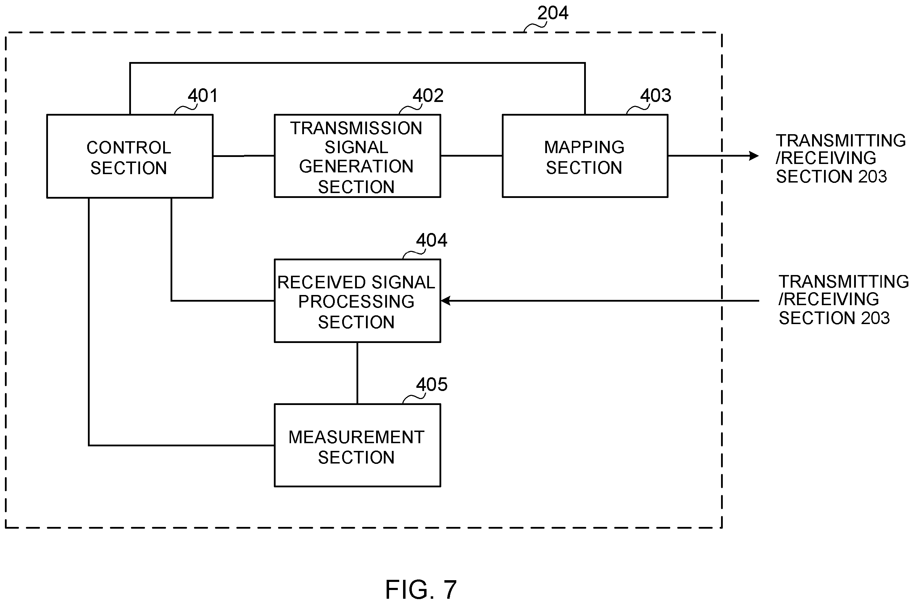

FIG. 7 is a diagram to show an exemplary functional structure of a user terminal according to one embodiment of this disclosure. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which this disclosure pertains can be used.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 controls the transmission power of signals to be transmitted. For example, the control section 401 may control transmission power independently for each power control ID. Furthermore, the control section 401 may apply common transmission power control to a plurality of power control IDs.

The control section 401 transmits a signal that corresponds to an object set specified by a certain power control ID, by using transmission power determined according to a transmission power parameter set specified by the certain power control ID.

Preferably, an object set includes at least 2 of a beam, a waveform, a layer, a layer group, a panel, a beam group, a beam pair link, a service type, a numerology, a frequency, a service type and the like. Furthermore, a "waveform" may also be referred to as a "waveform signal," "signal in accordance with waveform," "waveform of signal," "signal," and so on.

Note that the control section 401 may obtain the power control ID from the received signal processing section 404, or the control section 401 may derive the power control ID based on an object ID, a transmission power parameter set ID and the like acquired from the received signal processing section 404. The control section 401 may also derive the power control ID based on at least one of the object set, object, transmission power parameter set, and transmission power parameter that are configured (reported).

The control section 401 may judge the association between object IDs and object sets, the association between parameter set IDs and transmission power parameter sets, the association between power control IDs and object IDs (object sets) with parameter set IDs (transmission power parameter sets) and so on, based on information reported form the radio base station 10, information set forth in the specification and so on, and control the transmission power of transmission signals.

Here, the information reported from the radio base station 10 may be configuration information (for example, at least one of the aforementioned association-related information) for a plurality of power control IDs (and/or object IDs and/or parameter set IDs).

Note that the control section 401 may derive the relationship between the object set and the transmission power parameter set, directly, without referring to the power control ID.

The control section 401 may control transmission power according to the transmission power parameter set that is specified by one of a plurality of power control IDs. The control section 401 may judge that all or a part of the plurality of power control IDs are the target of PH reporting.

The control section 401 may determine the above reporting target based on information reported from the radio base station 10 (for example, information about the reporting target IDs).

When a report for switching the power control ID to use to control transmission power arrives (when a power control ID that is different from the one currently used is received), the control section 401 may judge that the power control ID after the switch is the reporting target.

The control section 401 may calculate PHs pertaining to the reporting-target IDs based on a certain reference format, which is determined based on a report from the radio base station 10.

The control section 401 may calculate PHs pertaining to the reporting-target IDs based on the PH pertaining to a particular power control ID (the reference ID for PH calculation).

Also, when various pieces of information reported from the radio base station 10 are acquired from the received signal processing section 404, the control section 401 may update the parameters used in the control based on these pieces of information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generation apparatus that can be described based on general understanding of the technical field to which this disclosure pertains.

For example, the transmission information generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which this disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which this disclosure pertains. Also, the received signal processing section 404 can constitute the receiving section according to this disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which this disclosure pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI) and so on. The measurement results may be output to the control section 401.

(Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by 1 piece of apparatus that is physically and/or logically aggregated, or may be realized by directly and/or indirectly connecting two or more physically and/or logically separate pieces of apparatus (via wire or wireless, for example) and using these multiple pieces of apparatus.

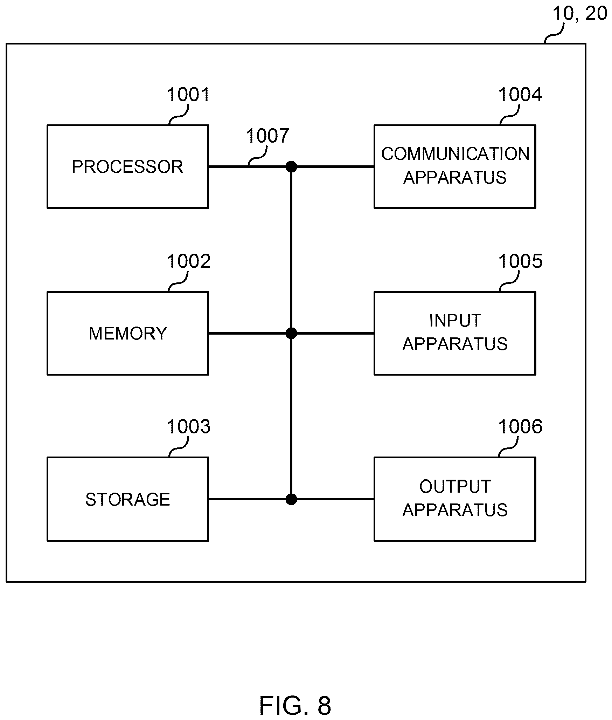

For example, the radio base station, user terminals and so on according to one embodiment of the present invention may function as a computer that executes the processes of the radio communication method of the present invention. FIG. 8 is a diagram to show an example hardware structure of a radio base station and a user terminal according to one embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read certain software (programs), thereby allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

(Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may be comprised of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or multiple slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "mini-slot," a "sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included per subframe or radio frame, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to certain values, or may be represented using other applicable information. For example, a radio resource may be specified by a certain index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of certain information (for example, reporting of information to the effect that "X holds") does not necessarily have to be sent explicitly, and can be sent in an implicit way (for example, by not reporting this piece of information, by reporting another piece of information, and so on).

Decisions may be made in values represented by 1 bit (0 or 1), may be made in Boolean values that represent true or false, or may be made by comparing numerical values (for example, comparison against a certain value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "gNB," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each example/embodiment of this disclosure may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access."

As used herein, when 2 elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical (both visible and invisible) regions.

In the present specification, the phrase "A and B are different" may mean "A and B are different from each other." The terms such as "leave" "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

**Claims**

1. A terminal (20) comprising:

   a receiving section (203) configured to receive an indicator related to power control;
   a control section (401) configured to determine a transmission power in accordance with a transmission power parameter set determined from a first index associated with the indicator; and
   a transmission section (203) configured to transmit at least one of a signal and a channel corresponding to an object set specified by a second index associated with the indicator, using the transmission power;
   wherein the transmission section (203) is configured to transmit a power headroom report, PHR, including information about a power headroom, PH, corresponding to the indicator, and
   wherein the object set comprises at least one value representing one or more objects which are at least one of a beam, a layer, a layer group, a panel, a beam group, a beam pair link, a numerology, a frequency, a code, and a sequence.

2. The terminal (20) according to claim 1, wherein, if a different indicator from the indicator is received, the transmission section (203) is configured to transmit a PHR that includes information about a PH corresponding to the different indicator.

3. The terminal (20) according to claim 1 or 2, wherein the control section (401) is configured to calculate the PH based on a reference format.

4. The terminal (20) according to any one of claims 1 to 3, wherein the receiving section (203) configured to receive configuration information for a plurality of the indicator.

5. The terminal (20) according to any one of claims 1 to 4, wherein the transmission section (203) is configured to transmit a PHR that includes information about a PH computed based on an object set, this object set serving as a basis in PH computation and being configured by a higher layer signaling.

6. A radio communication method for a terminal (20) comprising:

   receiving, by the terminal, an indicator related to power control;
   determining, by the terminal, a transmission power in accordance with a transmission power parameter set determined from a first index associated with the indicator;
   transmitting at least one of a signal and a channel corresponding to an object set specified by a second index associated with the indicator, using the transmission power; and
   transmitting, by the terminal, a power headroom report, PHR, including information about a power headroom, PH, corresponding to the indicator;
   wherein the object set comprises at least one value representing one or more objects which are at least one of a beam, a layer, a layer group, a panel, a beam group, a beam pair link, a numerology, a frequency, a code, and a sequence.

7. A base station (10) comprising:

   a transmission section (103) configured to transmit, to a terminal (20), an indicator related to power control; and
   a receiving section (103) configured to receive at least one of a signal and a channel corresponding to an object set specified by a second index associated with the indicator, transmitted by the terminal (20) using a transmission power controlled in accordance with a transmission power parameter set determined from a first index associated with the indicator;
   wherein the receiving section (103) is configured to receive a power headroom report, PHR, including information about a power headroom, PH, corresponding to the indicator; and
   wherein the object set comprises at least one value representing one or more objects which are at least one of a beam, a layer, a layer group, a panel, a beam group, a beam pair link, a numerology, a frequency, a code, and a sequence.

8. A system (1) comprising the terminal (20) according to any one of claim 1 to claim 5 and the base station (10) according to claim 7.

**Patentansprüche**

1. Endgerät (20), umfassend:

    einen Empfangsabschnitt (203), der so konfiguriert ist, dass er einen Indikator empfängt, der sich auf eine Leistungssteuerung bezieht;
    einen Steuerabschnitt (401), der so konfiguriert ist, dass er eine Sendeleistung in Übereinstimmung mit einem Sendeleistungsparametersatz bestimmt, der aus einem dem Indikator zugeordneten ersten Index bestimmt wird; und
    einen Sendeabschnitt (203), der so konfiguriert ist, dass er unter Verwendung der Sendeleistung mindestens eines von einem Signal und einem Kanal entsprechend einem Objektsatz sendet, der durch einen zweiten, dem Indikator zugeordneten Index spezifiziert ist;
    wobei der Sendeabschnitt (203) so konfiguriert ist, dass er einen Leistungsreservenbericht, PHR, einschließlich Informationen über eine Leistungsreserve, PH, entsprechend dem Indikator sendet, und
    wobei der Objektsatz mindestens einen Wert umfasst, der ein oder mehrere Objekte repräsentiert, die mindestens eines von einem Strahl, einer Schicht, einer Schichtgruppe, einem Feld, einer Strahlgruppe, einer Strahlpaarverbindung, einer Numerologie, einer Frequenz, einem Code und einer Sequenz sind.

2. Endgerät (20) nach Anspruch 1, wobei, wenn ein anderer Indikator als der Indikator empfangen wird, der Sendeabschnitt (203) so konfiguriert ist, dass er einen PHR sendet, der Informationen über eine PH einschließt, die dem anderen Indikator entspricht.

3. Endgerät (20) nach Anspruch 1 oder 2, wobei der Steuerabschnitt (401) so konfiguriert ist, dass er die PH auf der Grundlage eines Referenzformats berechnet.

4. Endgerät (20) nach einem der Ansprüche 1 bis 3, wobei der Empfangsabschnitt (203) so konfiguriert ist, dass er Konfigurationsinformationen für eine Vielzahl der Indikatoren empfängt.

5. Endgerät (20) nach einem der Ansprüche 1 bis 4, wobei der Sendeabschnitt (203) so konfiguriert ist, dass er eine PHR sendet, die Informationen über eine PH einschließt, die auf der Grundlage eines Objektsatzes berechnet wird, wobei dieser Objektsatz als Grundlage für eine PH-Berechnung dient und durch eine Signalisierung auf höherer Ebene konfiguriert ist.

6. Funkkommunikationsverfahren für ein Endgerät (20), umfassend:

    Empfangen, durch das Endgerät, eines Indikators, der sich auf eine Leistungssteuerung bezieht;
    Bestimmen einer Sendeleistung durch das Endgerät in Übereinstimmung mit einem Sendeleistungsparametersatz, der aus einem ersten, dem Indikator zugeordneten Index bestimmt wird;
    Senden mindestens eines von einem Signal und einem Kanal entsprechend einem Objektsatz, der durch einen zweiten, dem Indikator zugeordneten Index spezifiziert ist, unter Verwendung der Sendeleistung; und
    Senden, durch das Endgerät, eines Leistungsreservenberichts, PHR, einschließlich Informationen über eine Leistungsreserve, PH, die dem Indikator entspricht;
    wobei der Objektsatz mindestens einen Wert umfasst, der ein oder mehrere Objekte repräsentiert, die mindestens eines von einem Strahl, einer Schicht, einer Schichtgruppe, einem Feld, einer Strahlgruppe, einer Strahlpaarverbindung, einer Numerologie, einer Frequenz, einem Code und einer Sequenz sind.

7. Basisstation (10), umfassend:

    einen Sendeabschnitt (103), der so konfiguriert ist, dass er an ein Endgerät (20) einen auf eine Leistungssteuerung bezogenen Indikator sendet; und
    einen Empfangsabschnitt (103), der so konfiguriert ist, dass er mindestens eines von einem Signal und einem Kanal entsprechend einem Objektsatz empfängt, der durch einen dem Indikator zugeordneten zweiten Index spezifiziert ist, der von dem Endgerät (20) unter Verwendung einer Sendeleistung gesendet wird, die in Übereinstimmung mit einem Sendeleistungsparametersatz gesteuert wird, der aus einem dem Indikator zugeordneten ersten Index bestimmt wird;
    wobei der Empfangsabschnitt (103) so konfiguriert ist, dass er einen Leistungsreservenbericht, PHR, einschließlich Informationen über eine Leistungsreserve, PH, entsprechend dem Indikator empfängt; und
    wobei der Objektsatz mindestens einen Wert umfasst, der ein oder mehrere Objekte repräsentiert, die mindestens eines von einem Strahl, einer Schicht, einer Schichtgruppe, einem Feld, einer Strahlgruppe, einer Strahlpaarverbindung, einer Numerologie, einer Frequenz, einem Code und einer Sequenz sind.

8.  System (1) umfassend das Endgerät (20) nach einem von Anspruch 1 bis Anspruch 5 und die Basisstation (10) nach Anspruch 7.

## Revendications

1.  Terminal (20) comprenant :

    une section de réception (203) configurée pour recevoir un indicateur relatif à une commande de puissance ;
    une section de commande (401) configurée pour déterminer une puissance de transmission conformément à un ensemble de paramètres de puissance de transmission déterminé à partir d'un premier indice associé à l'indicateur ; et
    une section de transmission (203) configurée pour transmettre au moins l'un d'un signal et d'un canal correspondant à un ensemble d'objets spécifié par un second indice associé à l'indicateur, en utilisant la puissance de transmission ;
    dans lequel la section de transmission (203) est configurée pour transmettre un rapport de marge de puissance, PHR, incluant des informations sur une marge de puissance, PH, correspondant à l'indicateur, et
    dans lequel l'ensemble d'objets comprend au moins une valeur représentant un ou plusieurs objets qui sont au moins l'un d'un faisceau, d'une couche, d'un groupe de couches, d'un panneau, d'un groupe de faisceaux, d'une liaison de paire de faisceaux, d'une numérologie, d'une fréquence, d'un code et d'une séquence.

2.  Terminal (20) selon la revendication 1, dans lequel, si un indicateur différent de l'indicateur est reçu, la section de transmission (203) est configurée pour transmettre un PHR qui inclut des informations sur une PH correspondant à l'indicateur différent.

3.  Terminal (20) selon la revendication 1 ou la revendication 2, dans lequel la section de commande (401) est configurée pour calculer la PH sur la base d'un format de référence.

4.  Terminal (20) selon l'une quelconque des revendications 1 à 3, dans lequel la section de réception (203) est configurée pour recevoir des informations de configuration pour une pluralité de l'indicateur.

5.  Terminal (20) selon l'une quelconque des revendications 1 à 4, dans lequel la section de transmission (203) est configurée pour transmettre un PHR qui inclut des informations sur une PH calculée sur la base d'un ensemble d'objets, cet ensemble d'objets servant de base dans le calcul de la PH et étant configuré par une signalisation de couche supérieure.

6.  Procédé de communication radio pour un terminal (20) comprenant :

    une réception, par le terminal, d'un indicateur relatif à une commande de puissance ;
    une détermination, par le terminal, d'une puissance de transmission conformément à un ensemble de paramètres de puissance de transmission déterminé à partir d'un premier indice associé à l'indicateur ;
    une transmission d'au moins l'un d'un signal et d'un canal correspondant à un ensemble d'objets spécifié par un second indice associé à l'indicateur, en utilisant la puissance de transmission ; et
    une transmission, par le terminal, d'un rapport de marge de puissance, PHR, incluant des informations sur une marge de puissance, PH, correspondant à l'indicateur ;
    dans lequel l'ensemble d'objets comprend au moins une valeur représentant un ou plusieurs objets qui sont au moins l'un d'un faisceau, d'une couche, d'un groupe de couches, d'un panneau, d'un groupe de faisceaux, d'une liaison de paires de faisceaux, d'une numérologie, d'une fréquence, d'un code et d'une séquence.

7.  Station de base (10) comprenant :

    une section de transmission (103) configurée pour transmettre, à un terminal (20), un indicateur relatif à une commande de puissance ; et
    une section de réception (103) configurée pour recevoir au moins l'un d'un signal et d'un canal correspondant à un ensemble d'objets spécifié par un second indice associé à l'indicateur, transmis par le terminal (20) en utilisant une puissance de transmission commandée conformément à un ensemble de paramètres de puissance de transmission déterminé à partir d'un premier indice associé à l'indicateur ;

dans laquelle la section de réception (103) est configurée pour recevoir un rapport de marge de puissance, PHR, incluant des informations sur une marge de puissance, PH, correspondant à l'indicateur ; et

dans laquelle l'ensemble d'objets comprend au moins une valeur représentant un ou plusieurs objets qui sont au moins l'un d'un faisceau, d'une couche, d'un groupe de couches, d'un panneau, d'un groupe de faisceaux, d'une liaison de paires de faisceaux, d'une numérologie, d'une fréquence, d'un code et d'une séquence.

8. Système (1) comprenant le terminal (20) selon l'une quelconque de la revendication 1 à la revendication 5 et la station de base (10) selon la revendication 7.

POWER CONTROL ID: 0

OBJECT ID: 0

BEAM IDS: 0 AND 1
WAVEFORM: CP-OFDM
SERVICE TYPE: eMBB

PARAMETER SET ID: 0

$\alpha$ : a
$P_{O\_PUSCH}$: x dB

POWER CONTROL ID: 1

OBJECT ID: 1

BEAM IDS: 2 AND 3
WAVEFORM: CP-OFDM
SERVICE TYPE: eMBB

PARAMETER SET ID: 1

$\alpha$ : b
$P_{O\_PUSCH}$: y dB

FIG. 1

EP 3 668 198 B1

gNB ————————————————————————————————————————————————→ TIME

STEP S11:
CONFIGURATION OF
POWER CONTROL
IDS (IDS 0 TO 4)

STEP S12:
CONFIGURATION OF
REPORTING-TARGET
IDS (IDS 1 AND 2)

STEP S13: PHR TRANSMISSION
CORRESPONDING TO
REPORTING-TARGET IDS 1 AND 2

UE ————————————————————————————————————————————————→ TIME

FIG. 2

FIG. 3

FIG. 4

TO HIGHER STATION APPARATUS 30 OR TO OTHER RADIO BASE STATIONS 10

10

106 COMMUNICATION PATH INTERFACE

104 BASEBAND SIGNAL PROCESSING SECTION

105 CALL PROCESSING SECTION

103 TRANSMITTING /RECEIVING SECTION

102 AMPLIFYING SECTION

101

FIG. 5

COMMUNICATION PATH INTERFACE 106

CONTROL SECTION — 301

TRANSMISSION SIGNAL GENERATION SECTION — 302

MAPPING SECTION — 303

TRANSMITTING /RECEIVING SECTION 103

RECEIVED SIGNAL PROCESSING SECTION — 304

TRANSMITTING /RECEIVING SECTION 103

MEASUREMENT SECTION — 305

104

EP 3 668 198 B1

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013165286 A1

**Non-patent literature cited in the description**

- Evolved Universal Terrestrial Radio Access (E-UTRA) and Evolved Universal Terrestrial Radio Access Network (E-UTRAN); Overall Description; Stage 2 (Release 8). *3GPP TS 36.300 V8.12.0,* April 2010